# EUROPEAN PATENT APPLICATION

(11) **EP 2 237 282 A2**
(43) Date of publication of application: **06.10.2010**
(21) Application number: 10156962.2
(22) Date of filing: 18.03.2010
(51) Int. Cl.: G21C 13/02, G21C 15/24, F04D 27/02, F04D 29/44, F04D 29/66

(54) **Steam flow vortex straightener**

(30) Priority: 30.03.2009 US 414106
(71) Applicant: GE-Hitachi Nuclear Energy Americas LLC, Wilmington, NC 28401 (US)
(72) Inventor: Ewida, Khaled M., Wilmington, NC 28411 (US); Carneal, James P., Wilmington, NC 28411 (US)
(74) Representative: Gray, Thomas

(57) **Abstract**

An embodiment of the present invention provides an apparatus for reducing the magnitude or frequency of flow-induced vibrations. An embodiment of the present invention may be integrated with at least one structure of a reactor pressure vessel (10) of a nuclear reactor. Other embodiments of the present invention may be integrated with other systems that require a dampening of and/or frequency change in the flow-induced vibrations. For example, but not limiting of, the other pressure vessels including: a steam generator, a heat exchanger, a condenser, a boiler, or the like.

## Description

The present application relates generally to steam pressure vessels; and more particularly to, a system for dampening a level of flow-induced vibrations experienced by components of a steam pressure vessel.

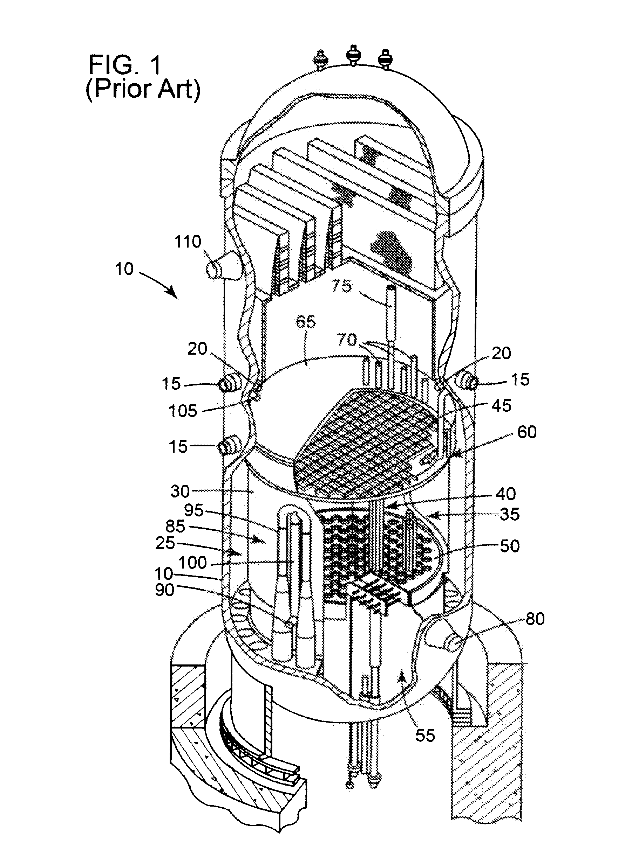

One type of steam pressure vessel is a conventional boiling water reactor (BWR) is shown in Figure 1. During operation of the reactor, coolant water circulating inside a reactor pressure vessel (RPV) 10 is heated by nuclear fission produced in the nuclear fuel core 35. Feedwater is admitted into the RPV 10 via a feedwater inlet 15 and a feedwater sparger pipe 20, which is adjacent a core spray line 105. The feedwater flows downwardly through a downcomer annulus 25, which is an annular region between RPV 10 and a core shroud 30.

The core shroud 30 is a stainless steel cylinder that surrounds the nuclear fuel core 35, which includes a plurality of fuel bundle assemblies 40 (only a few are illustrated in Figure 1). A top guide 45 and a core plate 50 supports each of the fuel bundle assemblies 40.

The coolant water flows downward through the downcomer annulus 25 and into the core lower plenum 55. Then the water in the core lower plenum 55 flows upward through the nuclear fuel core 35. In particular, water enters the fuel bundle assemblies 40, wherein a boiling boundary layer is established. A mixture of water and steam exits the nuclear fuel core 35 and enters the core upper plenum 60 under the shroud head 65. The steam-water mixture then flows through standpipes 70 on top of the shroud head 65 and enters the steam separators 75, which separates water from steam. The separated water is recirculated back to the downcomer annulus 25 and the steam exits the RPV 10 via a steam outlet nozzle 110.

The BWR also includes a coolant recirculation system, which provides the forced convection flow through the nuclear fuel core 35 necessary to attain the required power density. A portion of the water is drawn from the lower end of the downcomer annulus 25 via recirculation water outlet 80 and forced by a recirculation pump (not illustrated) into a plurality of jet pump assemblies 85 (one is illustrated in Figure 1) via recirculation water inlets 90. The jet pump assemblies 85 are typically circumferentially distributed around the core shroud 30 and provide the required reactor core flow. A typical BWR has sixteen to twenty-four inlet mixers 95.

As illustrated in Figure 1, a conventional jet pump assembly 85 comprises a pair of inlet mixers 95. Each inlet mixer 95 has an elbow welded thereto, which receives pressurized driving water from a recirculation pump (not illustrated) via an inlet riser 100. A type of inlet mixer 95 comprises a set of five nozzles circumferentially distributed at equal angles about the inlet mixer axis (not illustrated in the Figures). Here, each nozzle is tapered radially inwardly at the nozzle outlet. This convergent nozzle energizes the jet pump assembly 85. A secondary inlet opening (not illustrated) is radially outside of the nozzle exits. Therefore, as jets of water exit the nozzles, water from the downcomer annulus 25 is drawn into the inlet mixer 95 via the secondary inlet opening, where mixing with water from the recirculation pump then occurs.

During operation steam exiting the RPV 10 tends to rotate while flowing through the steam outlet nozzle 110, creating at least one vortex. The vortex can create flow-induced vibrations and a pressure loss. As known, flow-induced vibrations are a factor in causing cracks to internal RPV 10 components, such as, but not limiting of, the steam separators 75. Some flow-induced vibrations have pressure fluctuations with frequencies close to one or more natural vibration modes of one, or more, of the internal components of the RPV 10. When an excitation frequency is near the natural frequencies of the internal component, the resulting vibration may crack the internal component. This may require the RPV 10 to operate at a reduced load. This may also require a shutdown of the RPV 10.

For the aforementioned reasons, there is a need for an apparatus and system for reducing the likelihood of flow-induced vibrations. The apparatus should reduce the possibility of vortex formation. The apparatus should provide a cost effective solution to the known issue of flow-induced vibrations occurring in pressure vessels.

### BRIEF DESCRIPTION OF THE INVENTION

In accordance with an embodiment of the present invention, an apparatus for reducing flow induced vibrations within a system, the apparatus comprising: a base (210) adaptable for integrating within a system that allows for flow induced vibrations; and a vortex restrictor (220) configured for reducing the likelihood of a flow vortex forming; wherein the flow vortex leads to the flow induced vibrations; and wherein the vortex restrictor (220) is supported by the base; wherein the vortex restrictor (220) is positioned adjacent a flow path of a fluid of the system and reduces a level of the flow induced vibrations.

In accordance with another embodiment of the present invention, a system for reducing flow induced vibrations experienced within a steam system of a nuclear reactor pressure vessel (RPV) (10), the system comprising: a nuclear fuel core (35) comprising a plurality of fuel bundle assemblies (40); a feedwater inlet (15); a steam nozzle (110) ; and a flow straightener (200) comprising a base (210) and a vortex restrictor (220); wherein the vortex restrictor (220) is positioned adjacent a steam flow path of steam within the steam system and reduces a level of flow induced vibrations.

### BRIEF DESCRIPTION OF THE DRAWING

There follows a detailed description of embodiments of the invention by way of example only with reference to the accompanying drawings, in which:

Figure 1 is a schematic illustrating the environment in which an embodiment of the present invention operates.

Figure 2 is a schematic illustrating an isometric view of an embodiment of a flow straightener positioned within an environment in the present invention operates.

Figures 3A-3B, collectively Figure 3, are schematics illustrating plan and elevation views of a flow straightener in accordance with an embodiment of the present invention.

Figure 4 is a schematic illustrating a plan view of an alternate embodiment of a flow straightener, in accordance with an embodiment of the present invention.

Figures 5 is a schematic illustrating an isometric sectional view of an embodiment of the present invention installed to a RPV, in accordance with an embodiment of the present invention.

### DETAILED DESCRIPTION OF THE INVENTION

Certain terminology is used herein for convenience only and is not to be taken as a limitation on the invention. For example, words such as "upper," "lower," "left," "front", "right," "horizontal," "vertical," "upstream," "downstream," "fore", and "aft" merely describe the configuration shown in the Figures. Indeed, the components may be oriented in any direction and the terminology, therefore, should be understood as encompassing such variations unless specified otherwise.

The following discussion focuses on an embodiment of the present invention integrated with at least one steam outlet nozzle 110 of the RPV 10. Other embodiments of the present invention may be integrated with other systems that require a dampening of and/or frequency change in the flow-induced vibrations.
For example, but not limiting of, the other pressure vessels including: a steam generator, a heat exchanger, a condenser, a boiler, or the like.

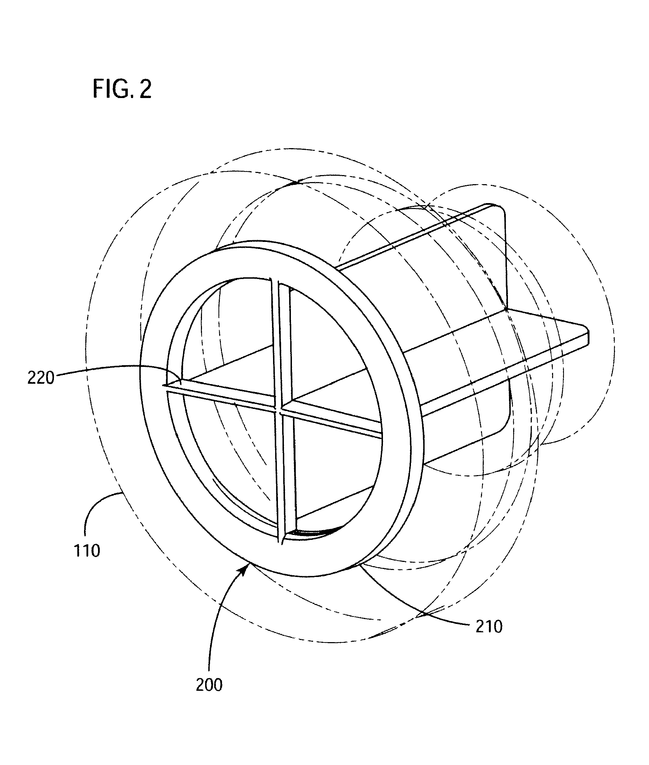

Referring again to the Figures, where the various numbers represent like parts throughout the several views. Figure 2 is a schematic illustrating an isometric view of an embodiment of a flow straightener 200 positioned within an environment in the present invention operates. Here, the flow straightener 200 is located within the steam outlet nozzle 110.

An embodiment of the flow straightener 200 may comprise two primary components, a base 210 and a vortex restrictor 220. The base 210 generally serves to support the flow straightener 200. The base 210 may be adapted for connecting with at least one surface of the steam outlet nozzle 110. The vortex restrictor 220 configured for reducing the likelihood of formation of a flow vortex. A portion of the vortex restrictor 220 may be positioned adjacent a flow path of a fluid flowing within a system of the RPV 10.

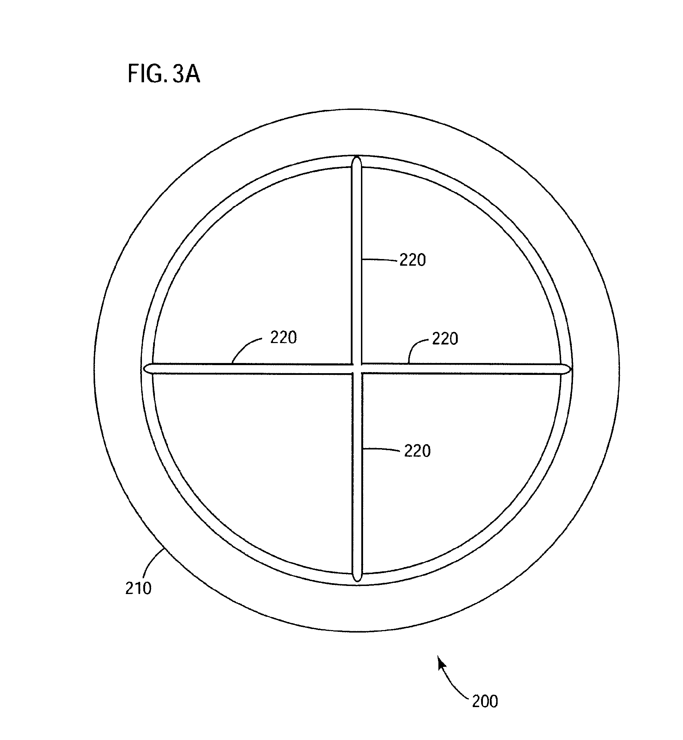

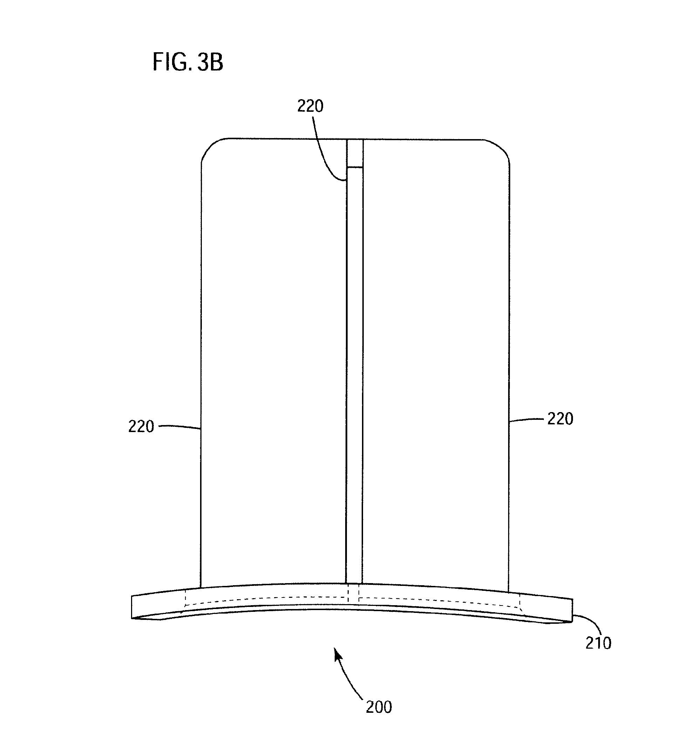

Figures 3A-3B, collectively Figure 3, are schematics illustrating plan and elevation views of a flow straightener 200 in accordance with an embodiment of the present invention.

Specifically, Figure 3A illustrates, an embodiment of the base 210, which may comprises a ring portion or a ring-like shape. This may allow for an outer diameter of the base 210 to mate with an inner diameter of the steam outlet nozzle 110, as illustrated, for example, in Figure 2. The base 210 should be of sufficient dimensions that allows for a robust connection to the steam outlet nozzle 110 while supporting the vortex restrictor 220.

The vortex restrictor 220 generally serves to reduce the likelihood of the of at least one vortex formation. The vortex restrictor 220 may be positioned directly or indirectly within the flow path of the steam exiting the RPV 10. The vortex restrictor 220 may be formed of a shape that allows for partially or completely blocking the formation of a vortex. An embodiment of the vortex restrictor 220 may resemble a fin or vane-like, as illustrated in Figure 3. This embodiment of the flow straightener 200 may be position the vortex restrictor 220 directly in the flow path or the steam exiting the RPV 10, via the steam outlet nozzle 110. In an embodiment of the present invention, the at least one vane may be positioned in a plurality of directions. These directions may include, for example, but not limiting of, a horizontal direction, a vertical direction, an angled direction, or combinations thereof.

Figure 3A illustrates a plurality of vortex restrictors 220, in the form of multiple vanes. Here, a first vane is positioned in a vertical direction and a second vane is positioned in a horizontal direction. As illustrated in Figure 3A, the vortex restrictors 220 of the present embodiment form a cross-like shape that may prevent the steam flow from forming a vortex as the steam flows across the vortex restrictors 220. In alternate embodiments of the present invention, the vortex restrictors 220 may for example, but not limiting of, form an "X" shape, a "star" shape, or any combination thereof. Here, the vortex restrictors 200 may comprise a plurality of vanes, fins, or the like.

Figure 3B illustrates a side elevation view of the flow straightener 200 of Figure 3B. Here, the vortex restrictors 220, of an embodiment of the present invention, comprise vanes having a rectangular profile. Figure 3B also illustrates that the base 210 may be integrated with the vortex restrictor 220, forming a single flow straightener 200. This feature may allow for a relatively simple manufacturing process for creating the flow straightener 200.

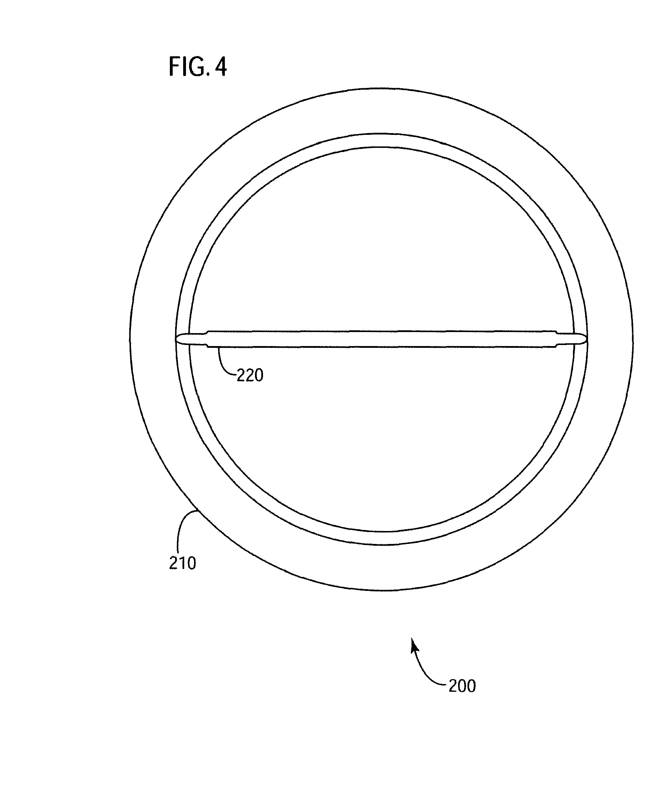

Figure 4 is a schematic illustrating a plan view of an alternate embodiment of a flow straightener 200, in accordance with an embodiment of the present invention. The vortex restrictor 220 may comprise a single fin or vane. Here, the vane may be positioned in a horizontal direction.

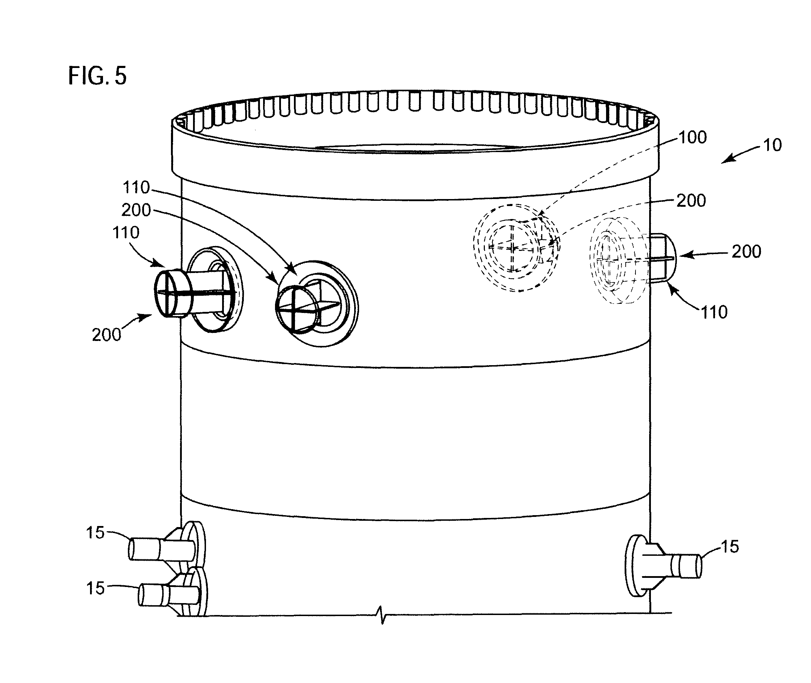

Figures 5 is a schematic illustrating an isometric sectional view of an embodiment of the present invention installed on a RPV 10, in accordance with an embodiment of the present invention. The RPV 10 may be similar to that illustrated in Figure 1, with the majority of components removed. Figure 5 illustrates an application with multiple flow straighteners 200 in use. Here, each flow straightener 200 is integrated with a steam outlet nozzle 110. In an embodiment of the present invention, the overall width of the flow straightener 200 may be similar to an overall width of the steam outlet nozzle 110, as illustrated in Figure 5.

In use, the flow straightener 200 engages the steam exiting the RPV 10 via the steam outlet nozzle 110, as previously described. Each flow straightener 200 may prevent the formation of the vortex, possibly leading to a reduction in flow-induced vibrations.

The components of an embodiment present invention may be formed of any material capable of withstanding the operating environment to which the flow straightener 200 may be exposed.

Although the present invention has been shown and described in considerable detail with respect to only a few exemplary embodiments thereof, it should be understood by those skilled in the art that we do not intend to limit the invention to the embodiments since various modifications, omissions and additions may be made to the disclosed embodiments without materially departing from the novel teachings and advantages of the invention, particularly in light of the foregoing teachings. Accordingly, we intend to cover all such modifications, omission, additions and equivalents as may be included within the spirit and scope of the invention as defined by the following claims.

## Claims

1. An apparatus for reducing flow induced vibrations within a system, the apparatus comprising:
a base (210) adaptable for integrating within a system that allows for flow induced vibrations; and
a vortex restrictor (220) configured for reducing the likelihood of a flow vortex forming; wherein the flow vortex leads to the flow induced vibrations; and wherein the vortex restrictor (220) is supported by the base (210);
wherein the vortex restrictor (220) is positioned adjacent a flow path of a fluid of the system and reduces a level of the flow induced vibrations.

2. The apparatus of claim 1, wherein a portion of the base (210) comprises a ring shape.

3. The apparatus of claim 2, wherein the vortex restrictor (220) comprises at least one vane, wherein the at least one vane engages the flow path.

4. The apparatus of claim 3, wherein the base (210) and the vortex restrictor (220) are integrated to form a flow straightener (200).

5. The apparatus of claim 4, wherein the fluid comprises steam.

6. The apparatus of claim 5, wherein the flow path comprises a steam flow path

7. The apparatus of claim 6, wherein the flow straightener (200) mates with a nozzle (110) within the steam path.

8. The apparatus of any of claims 5 to 7, wherein the steam flow path is integrated with at least one of: a conventional steam boiler, a pressure vessel, a nuclear reactor (10), or other steam system.

9. The apparatus of any of claims 3 to 8, wherein a position of the at least one vane comprises at least one of: a horizontal direction, a vertical direction, or combinations thereof.

10. The apparatus of claim 9, further comprising multiple vanes, wherein a position of each vane the multiple vanes comprises at least one of: a horizontal direction, a vertical direction, an angled direction, or combinations thereof.

11. A system for reducing flow induced vibrations experienced within a steam system of a nuclear reactor pressure vessel (RPV), the system comprising:
a nuclear fuel core comprising a plurality of fuel bundle assemblies;
a feedwater inlet;
a steam nozzle; and
a flow straightener comprising a base and a vortex restrictor; wherein the vortex restrictor is positioned adjacent a steam flow path of steam within the steam system and reduces a level of flow induced vibrations.

12. The system of claim 11, wherein the vortex restrictor is configured for reducing the likelihood of a flow vortex forming; wherein the flow vortex causes the flow induced vibrations.

13. The system of claim 12, wherein a portion of the base comprises a shape that allows for matting with the steam nozzle.

14. The system of claim 13, wherein the vortex restrictor comprises at least one vane,
wherein the at least one vane engages the flow path.

15. The system of claim 14, wherein the base and the vortex restrictor collectively form a flow straightener.
